# EUROPÄISCHE PATENTSCHRIFT

(11) **EP 3 914 474 B1**
(45) Veröffentlichungstag und Bekanntmachung des Hinweises auf die Patenterteilung: **27.07.2022**
(21) Anmeldenummer: 20706618.4
(22) Anmeldetag: 22.01.2020
(51) Int. Cl.: B60N 2/015, B60N 2/08

(54) **FÜHRUNGSVORRICHTUNG MIT VERRIEGELUNGSVORRICHTUNG**
GUIDING DEVICE WITH LOCKING DEVICE
DISPOSITIF DE GUIDAGE AVEC DISPOSITIF DE VERROUILLAGE

(30) Priorität: 22.01.2019 DE 102019000381
(43) Veröffentlichungstag der Anmeldung: 01.12.2021
(73) Patentinhaber: VOLKSWAGEN AKTIENGESELLSCHAFT, 38440 Wolfsburg (DE)
(72) Erfinder: BERDICH, Josef, 92224 Amberg (DE); WEIN, Hermann, 92263 Ebermannsdorf (DE); KREUZER, Helmut, 92249 Vilseck (DE)
(74) Vertreter: Schulz Junghans Patentanwälte PartGmbB
(86) Internationale Anmeldenummer: PCT/DE2020/100041
(87) Internationale Veröffentlichungsnummer: WO 2020/151787

(56) Entgegenhaltungen:
- EP-A1- 1 176 047
- DE-A1-102012 017 299
- FR-A1- 2 864 481

## Beschreibung

Eine solche Führungsvorrichtung ist aus offenkundiger Vorbenutzung bekannt. Ein Ausstattungsteil ist auf einer fahrzeugfesten Führungsbahn bewegbar geführt und kann in unterschiedlichen Positionen relativ zu der Führungsbahn verriegelt werden. Dazu umfasst die Führungsvorrichtung eine Verriegelungsvorrichtung, welche zwischen einer Riegelposition und einer Löseposition bewegt werden kann, indem eine erste oder eine zweite von zwei Handhaben betätigt wird. Durch Betätigen einer dritten Handhabe, konnte das Ausstattungsteil aus der Führungsbahn gelöst werden.

Eine Führungsvorrichtung nach dem Oberbegriff des Anspruchs 1 ist z.B. aus der FR 2 864 481 A1 offenbart.

Es war Aufgabe der Erfindung eine Führungsvorrichtung zu schaffen, die in der Handhabung verbessert ist.

Die Aufgabe wurde gelöst durch eine Führungsvorrichtung mit den Merkmalen des Anspruchs 1.

Die Führungsvorrichtung umfasst erste Führungsmittel, die einem Ausstattungsteil zugeordnet sind und zweite Führungsmitteln, die einer Struktur des Fahrzeugs zugeordnet sind und die eine Führungsbahn bilden entlang der das Ausstattungsteil in entgegengesetzte Bahnrichtungen x1, x2 bewegbar geführt ist. Die ersten Führungsmittel sind z.B. von Gleitelementen oder / und Wälzelementen gebildet, die mit den zweiten Führungsmitteln eine Lagerung derart bilden, dass das Ausstattungsteil entlang der Führungsbahn bewegbar geführt ist.

Die Führungsbahn ist z.B. linear ausgebildet. Alternativ ist die Führungsbahn kurvenförmig ausgebildet. Die Führungsbahn kann z.B. alternativ auch gerade und kurvenförmige Abschnitte aufweisen.

Die Führungsvorrichtung umfasst eine Verriegelungsvorrichtung, die eine X-Verriegelung und eine Z-Verriegelung einschließt. Die X-Verriegelung weist dem Ausstattungsteil zugeordnete erste Verriegelungsmittel und der Fahrzeugstruktur zugeordnete zweite Verriegelungsmittel auf, mittels welcher eine Bewegung des Ausstattungsteils entlang der Bahnrichtungen x1, x2 lösbar verriegelbar ist.

Die Z-Verriegelung umfasst dem Ausstattungsteil zugeordnete primäre Verriegelungsmittel und der Fahrzeugstruktur zugeordnete sekundäre Verriegelungsmittel, mittels welcher eine Bewegung in eine dritte Richtung (z1) zur Entnahme aus der Führungsbahn lösbar verriegelbar ist.

Die Verriegelungsvorrichtung weist wenigstens erste Betätigungsmittel und zweite Betätigungsmittel auf, mit welchen die X-Verriegelung und / oder die Z-Verriegelung zwischen einer Riegelposition und einer Löseposition bewegbar sind. Aufgrund einer Betätigung der ersten Betätigungsmittel oder der zweiten Betätigungsmittel von einer unbetätigten Position in eine betätigte Position ist die X-Verriegelung in eine Löseposition bewegbar.

Aufgrund der Betätigung der ersten Betätigungsmittel und der zweiten Betätigungsmittel ist erfindungsgemäß die Z-Verriegelung in eine Löseposition bewegbar.

Dabei können die ersten Betätigungsmittel und die zweiten Betätigungsmittel z.B. nacheinander von einer unbetätigten Position in eine betätigte Position bewegt werden um die Z-Verriegelung von einer Riegelposition in eine Löseposition zu bewegen. Alternativ können die ersten Betätigungsmittel und die zweiten Betätigungsmittel zugleich betätigbar sein. Bei einer Bewegung der Z-Verriegelung in die betätigte Position ist z.B. automatisch die X-Verriegelung in die Löseposition bewegt.

Auf diese Weise sind die Funktionen X-Verriegelung und Z-Verriegelung entriegelbar ohne hierfür separate Betätigungsmittel vorzusehen.

Die zweiten Führungsmittel umfassen z.B. wenigstens eine Schiene, insbesondere zwei Schienen. Mit einer Schiene lässt sich die Führung entlang einer geraden und / oder einer gebogenen Führungsbahn realisieren. Darüber hinaus kann mit der Schiene die X-Verriegelung und die Z-Verriegelung mit geringem zusätzlichen Aufwand vorgesehen werden.

Für die X-Verriegelung kann die Schiene z.B. quer zu dem Verlauf der Führungsbahn angeordnete Schlitze aufweisen, die mit einem Riegel des Ausstattungsteils zusammenwirken, welcher in Eingriff mit wenigstens einem der Schlitze oder außer Eingriff mit den Schlitzen bewegbar ist.

Für die Z-Verriegelung weist die Schiene z.B. einen horizontal verlaufenden Stegbereich auf, der von dem Riegel hintergriffen werden kann, um eine Bewegung in Z-Richtung zu verhindern.

Z.B. wirken die ersten Verriegelungsmittel mit wenigstens einer ersten Steuerfläche zusammen und die primären Verriegelungsmittel wirken mit mindestens einer zweiten Steuerfläche zusammen, wobei die erste Steuerfläche und die zweite Steuerfläche zwischen einer Riegelposition und einer Löseposition bewegbar sind. Die erste Steuerfläche und die zweite Steuerfläche können einem Steuerelement oder unterschiedlichen Steuerelementen zugeordnet sein, die separat oder gemeinsam bewegbar sind. An jedem Steuerelement können eine oder mehrere erste Steuerflächen und / oder zweite Steuerflächen ausgebildet sein. Von der Steuerfläche kann z.B. ein Endbereich eines bewegbaren Riegels derart gesteuert werden, dass er von der Steuerfläche in die Riegelposition und / oder in die Löseposition bewegbar ist, wenn sich das Steuerelement mit der Steuerfläche relativ zu dem Riegel bewegt.

Die erste Steuerfläche und die zweite Steuerfläche sind z.B. einem Steuerelement zugeordnet, welches zwischen einer Riegelposition, einer ersten Löseposition und einer zweiten Löseposition bewegbar ist. In der ersten Löseposition ist z.B. lediglich die X-Verriegelung in die Löseposition bewegt, so dass das Ausstattungsteil in beide Bahnrichtungen bewegbar ist. In der zweiten Löseposition sind z.B. die Z-Verriegelung und ggf. auch die X-Verriegelung in die Löseposition bewegt, so dass das Ausstattungsteil zusätzlich aus der Führungsschiene entnehmbar ist.

Gemäß einer Ausführungsform ist die erste Steuerfläche und / oder die zweite Steuerfläche einer Kulisse zugeordnet. Die Kulisse weist eine erste Führungsfläche sowie eine gegenüberliegende zweite Führungsfläche auf. Ist z.B. ein Bereich eines Riegels in der Kulisse aufgenommen, so kann die Bewegung des Riegels zwischen der Riegelposition in die Löseposition von der ersten Führungsfläche sowie die umgekehrte Bewegung von der Löseposition in die Riegelposition von der zweiten Führungsfläche der Kulisse gesteuert werden.

Gemäß einer Ausführungsform wird bei Betätigung der ersten Betätigungsmittel oder der zweiten Betätigungsmittel das Steuerelement um einen bestimmten Betrag L bewegt und bei der anschließenden Betätigung der jeweils anderen Betätigungsmittel wird das Steuerelement um den gleichen Betrag L zusätzlich ausgelenkt. Auf diese Weise kann das Steuerelement z.B. bei der nacheinander erfolgenden Betätigung oder alternativ der gleichzeitigen Betätigung der ersten Betätigungsmittel und der zweiten Betätigungsmittel das Steuerelement um den Betrag 2L verlagert werden.

Gemäß einer Ausführungsform ist das Steuerelement wenigstens in der ersten Löseposition und / oder in der zweiten Löseposition arretierbar. Auf diese Weise kann verhindert werden, dass z.B. ein federbelasteter Riegel der ersten Verriegelungsmittel oder der primären Verriegelungsmittel sich automatisch in die Riegelposition zurückbewegt, wenn die Betätigungsmittel in die unbetätigte Position zurückgestellt werden.

Das Ausstattungsteil umfasst z.B. ein Stellelement, bei dessen Betätigung die Arretierung des Steuerelements lösbar ist, wobei das Stellelement derart angeordnet ist, dass beim Einsetzen des Ausstattungsteils in die zweiten Führungsmittel das Stellelement betätigt wird.

Führungsvorrichtung nach einem der vorangehenden Ansprüche, dadurch gekennzeichnet, dass die zweiten Führungsmittel zwei Führungsschienen und die ersten Führungsmittel wenigstens ein mit jeder Führungsschiene zusammenwirkendes Gleitelement oder Wälzelement umfassen.

Die ersten Verriegelungsmittel und / oder die primären Verriegelungsmittel umfassen z.B. wenigstens einen zwischen der Riegelposition und der Löseposition bewegbaren Riegel. Der Riegel kann z.B. schwenkbar oder alternativ translatorisch bewegbar gelagert sein. In der Riegelposition steht der Riegel in Eingriff mit den zweiten Verriegelungsmitteln bzw. den sekundären Verriegelungsmitteln. In der Löseposition ist der Riegel außer Eingriff mit den zweiten Verriegelungsmitteln bzw. den sekundären Verriegelungsmitteln.

Ein Ausführungsbeispiel der Erfindung ist in der nachfolgenden Figurenbeschreibung, auch unter Bezugnahme auf die schematischen Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Es zeigen:
Fig. 1 eine perspektivische Darstellung eines Ausstattungsteils, wobei die fahrzeugstrukturseitigen Teile der Führungsvorrichtung sowie der Verriegelungsvorrichtung nicht dargestellt sind,
Fig. 2 eine Draufsicht auf das Ausstattungsteil gemäß Fig. 1,

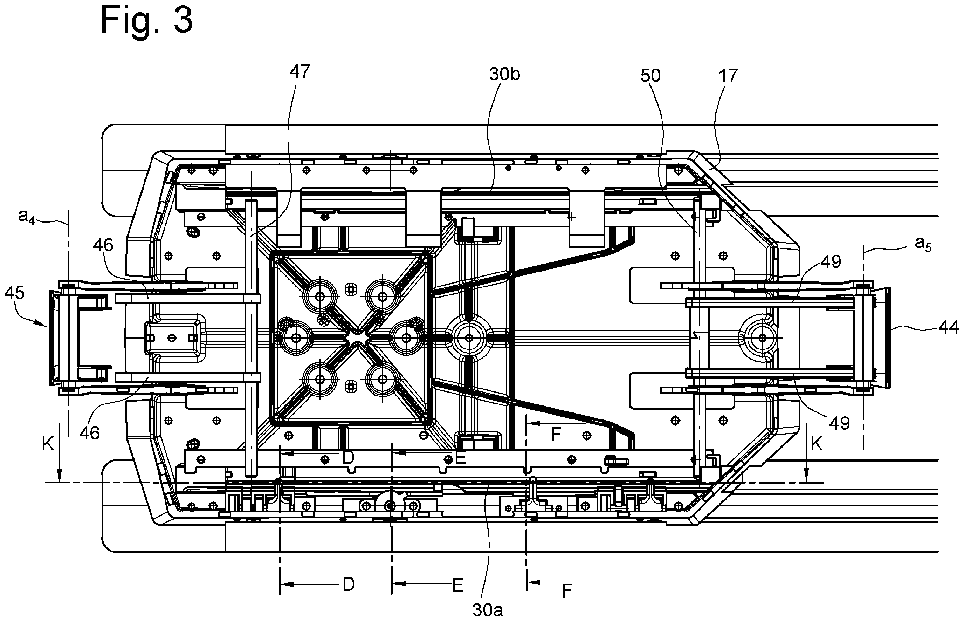

Fig. 3 eine Draufsicht in Anlehnung an Fig. 2, wobei eine Handhabe betätigt ist,

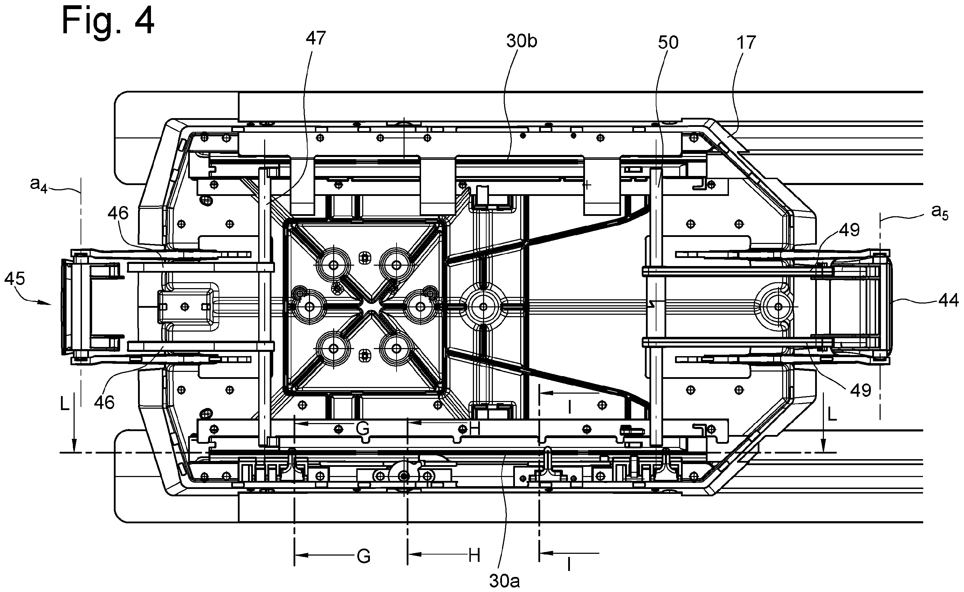

Fig. 4, eine Draufsicht in Anlehnung an Fig. 3, wobei beide Handhaben betätigt sind,
Fig. 5 eine Schnittdarstellung gemäß Schnittlinie J - J in Fig. 2,
Fig. 6 eine Schnittdarstellung gemäß Schnittlinie A - A in Fig. 2,
Fig. 7 eine Schnittdarstellung gemäß Schnittlinie B - B in Fig. 2,
Fig. 8 eine Schnittdarstellung gemäß Schnittlinie C - C in Fig. 2,

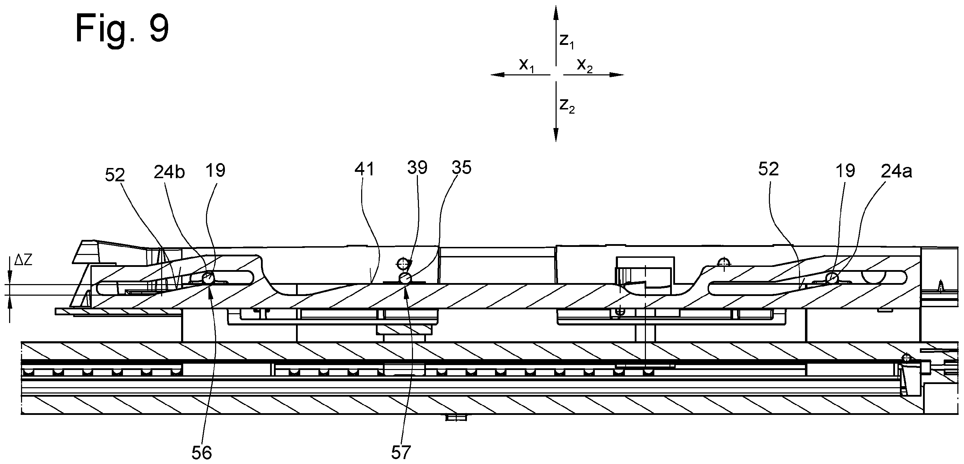

Fig. 9 eine Schnittdarstellung gemäß Schnittlinie K - K in Fig. 3,

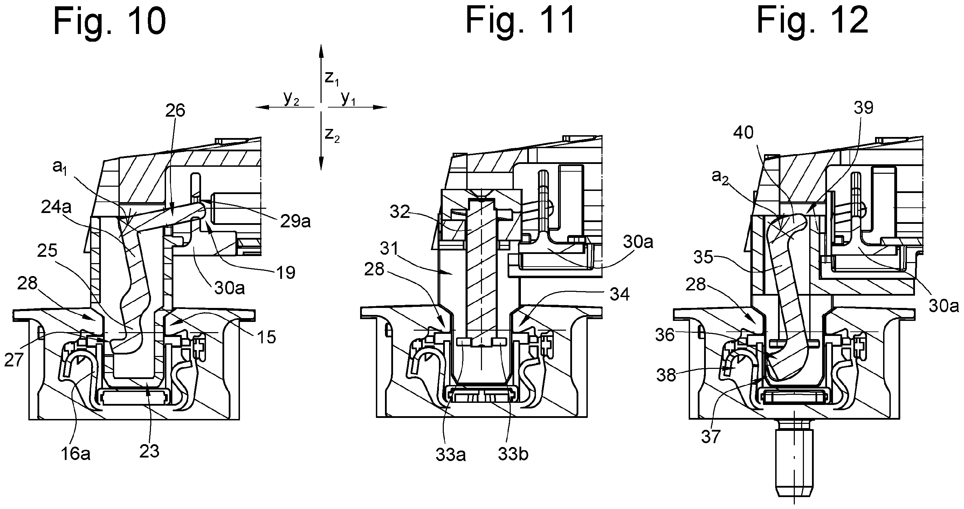

Fig. 10 eine Schnittdarstellung gemäß Schnittlinie D - D in Fig. 3,
Fig. 11 eine Schnittdarstellung gemäß Schnittlinie E - E in Fig. 3,
Fig. 12 eine Schnittdarstellung gemäß Schnittlinie F - F in Fig. 3,
Fig. 13 eine Schnittdarstellung gemäß Schnittlinie L - L in Fig. 4,

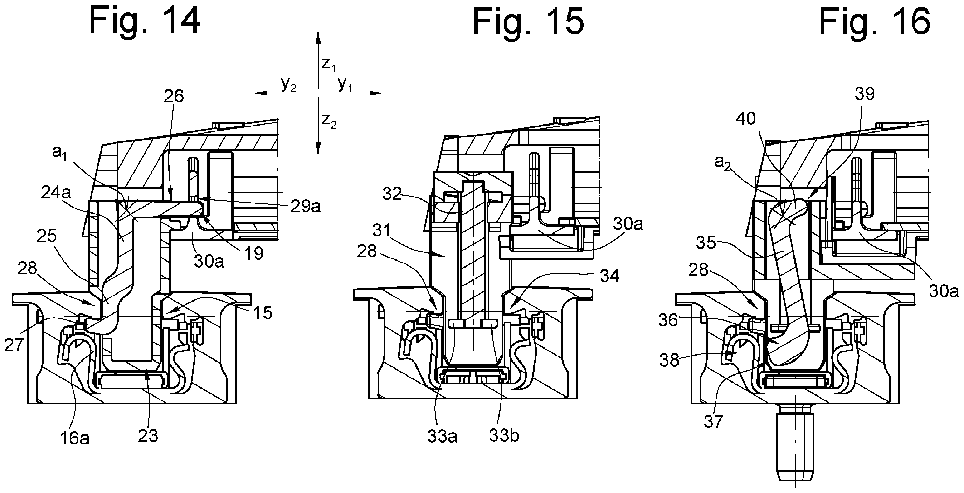

Fig. 14 eine Schnittdarstellung gemäß Schnittlinie G - G in Fig. 4,
Fig. 15 eine Schnittdarstellung gemäß Schnittlinie H - H in Fig. 4,
Fig. 16 eine Schnittdarstellung gemäß Schnittlinie I - I in Fig. 4

Die Führungsvorrichtung insgesamt ist in den Fig. mit dem Bezugszeichen 10 bezeichnet.

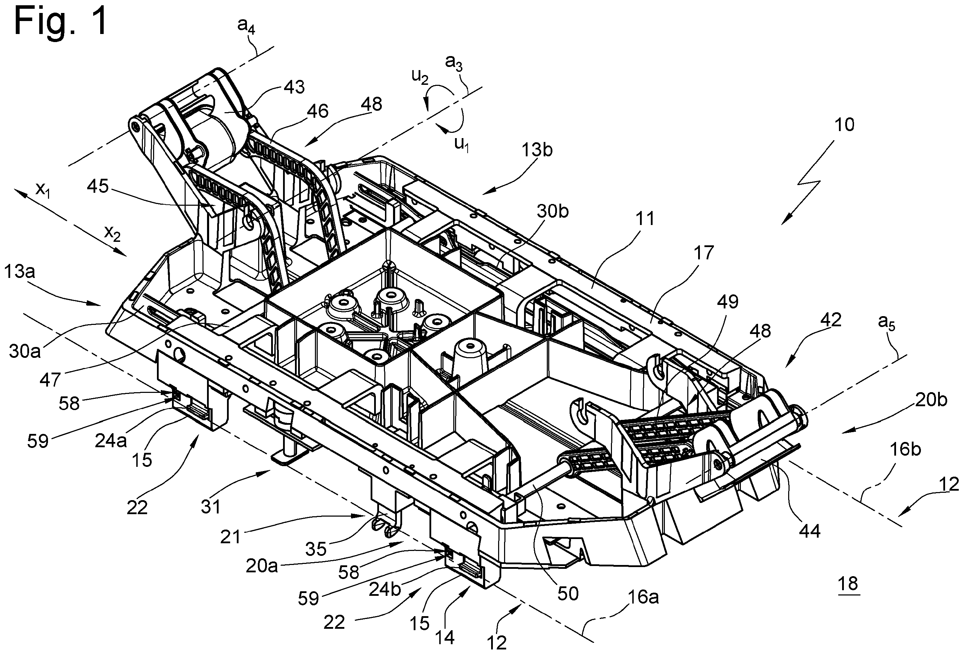

In Fig. 1 ist ein Ausstattungsteil 11 eines nicht dargestellten Fahrzeugs mit der erfindungsgemäßen Führungsvorrichtung 10 dargestellt. Der Übersichtlichkeit halber ist das Ausstattungsteil nur teilweise dargestellt. Zweite Führungsmittel 12 der Führungsvorrichtung 10 sind lediglich durch eine Strichpunktlinie dargestellt. Die zweiten Führungsmittel 12 wirken mit ersten Führungsmitteln 14 des Ausstattungsteils 11 zusammen.

Die ersten Führungsmittel sind im vorliegenden Ausführungsbeispiel von Vorsprüngen 15 gebildet. Die Vorsprünge 15 sind an einem Bodenelement 17 des Ausstattungsteils 11 gehalten und ragen in Richtung x2 bezüglich des Bodenelements 17 vor. Die Vorsprünge 15 sind mit Führungsschienen 16a und 16b der zweiten Führungsmittel 12 in Eingriff bringbar. Die Führungsschienen 16a und 16b verlaufen an einer Struktur 18 des Fahrzeugs, im vorliegenden Ausführungsbeispiel am Boden des Fahrzeugs, gradlinig in Richtung x1 bzw. x2.

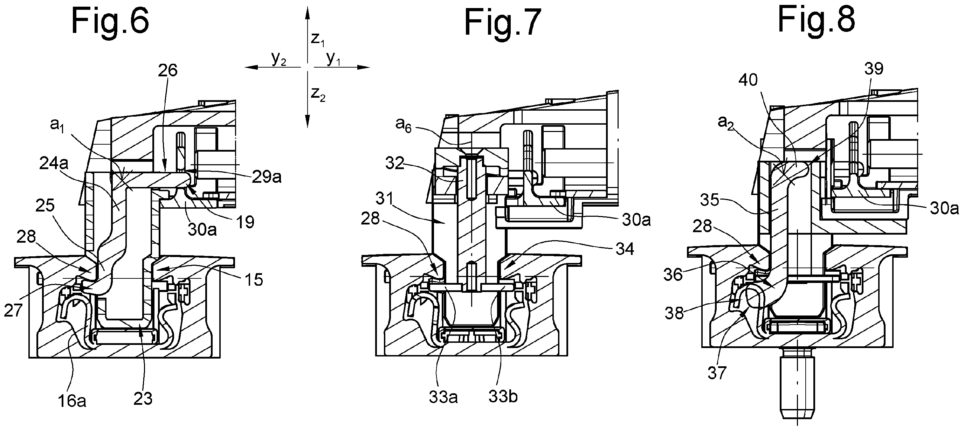

Mittels der Vorsprünge 15 sowie der Führungsschienen 16a und 16b ist das Ausstattungsteil 11 in die Richtungen x1 und x2 bewegbar geführt. Ein Bereich 23 des Vorsprungs 15 wirkt gemäß Fig. 6 derart mit der Schiene 16a zusammen, dass eine Bewegung in Richtung z2 sowie in die Richtungen y1 und y2 nicht möglich ist, dass eine Bewegung in die Richtungen x1 und x2 sowie in die Richtung z1 aber möglich ist.

Die Führungsvorrichtung 10 umfasst Verriegelungsvorrichtungen 20a und 20b an beiden Seiten 13a und 13b des Bodenelements 17. In den Fig. ist die Verriegelungsvorrichtung 20a beschrieben. Wenn auch die Verriegelungsvorrichtung 20b hier nicht beschrieben wird, ist sie aber in gleicher Weise wie die Verriegelungsvorrichtung 20a ausgebildet.

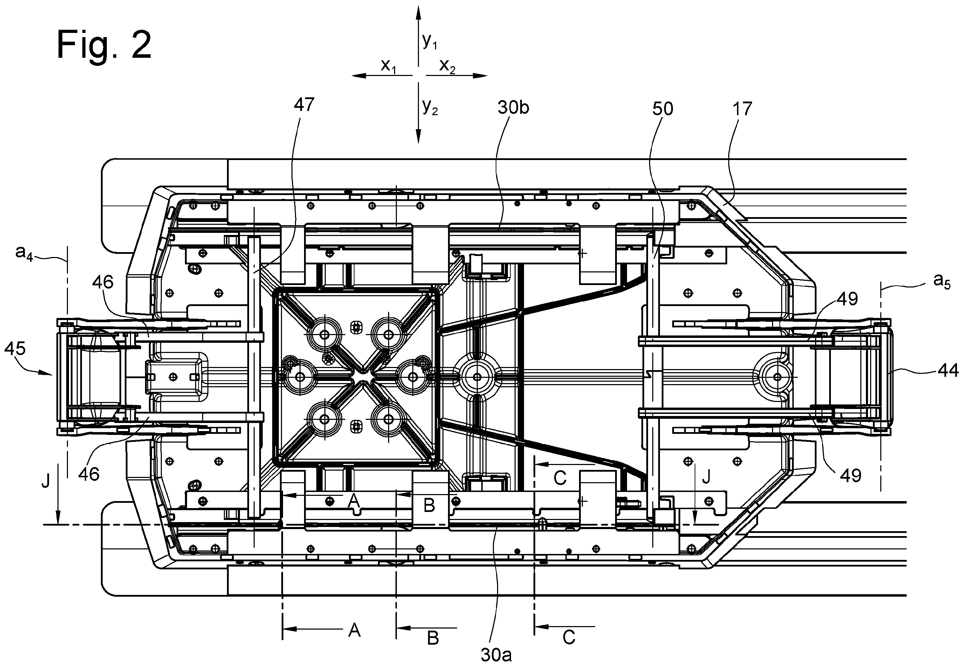

Jede der Verriegelungsvorrichtungen 20a und 20b umfasst eine X-Verriegelung 21, mit welcher eine Bewegung in die Richtungen x1 und x2 entlang der von den zweiten Führungsmitteln gebildeten Führungsschienen 16a und 16b verriegelbar ist sowie eine Z-Verriegelung 22, mit welcher eine Bewegung in Richtung z1 verriegelbar ist, so dass das Ausstattungsteil 11 nicht aus den Führungsschienen 16a und 16b entnehmbar ist. Wenn die X-Verriegelung 21 sowie die Z-Verriegelung 22 der Verriegelungsvorrichtungen 20a und 20b sich in der verriegelten Position befinden (siehe die Fig. 2 und 5 bis 8) ist das Ausstattungsteil 11 in keine Raumrichtung bewegbar.

Befindet sich die X-Verriegelung 21 in der Löseposition, kann das Ausstattungsteil 11 in die Richtungen x1 und x2 bewegt werden.

Wird die Z-Verriegelung 22 in die Löseposition verstellt, hat das Ausstattungsteil 11 einen zusätzlichen Freiheitsgrad in Richtung z1. Das Ausstattungsteil 11 kann aus den Führungsschienen 16a und 16b in Richtung z1 entnommen und in Richtung z2 in die Führungsschienen 16a und 16b wieder eingesetzt werden.

In Fig. 1 sind Riegel 24a und 24b der z-Verriegelung 22 der Verriegelungsvorrichtung 20a zu erkennen, die an dem Bodenelement 17 um eine Schwenkachse a1 schwenkbar gelagert sind. Der Riegel 24a ist - entsprechend dem Riegel 24b, der in gleicher Weise gestaltet ist - als zweiarmiger Hebel ausgebildet (siehe Fig. 6) und umfasst einen Hebelarm 25 mit einem hakenförmigen Endbereich 27 sowie einen Hebelarm 26. Der Endbereich 27 des Hebelarms 25 untergreift einen sich in x-Richtung erstreckenden Überhang 28 der zweiten Führungsmittel 12 und verhindert damit eine Bewegung in Richtung z1. Eine Bewegung in Richtung x1 und x2 wird durch den Eingriff nicht verhindert. Ein Endbereich 19 des zweiten Hebelarms 26 ist mit einer Steuerfläche 52 einer Kulisse 29a eines Steuerelements 30a in Eingriff. Mittels des Steuerelements 30a kann der Riegel 24a in Eingriff mit dem Überhang 28 oder außer Eingriff mit dem Überhang 28 bewegt werden. Der Riegel 24b steht in vergleichbarer Weise wie der Riegel 24a in Eingriff mit einer Kulisse 29b des Steuerelements 30a.

In Gleicher Weise wie die Riegel 24a und 24b der Verriegelungsvorrichtung 20a stehen die Riegel 24a und 24b der Verriegelungsvorrichtung 20b in Eingriff mit Kulissen 29a und 29b eines Steuerelements 30b und können in Eingriff oder außer Eingriff mit der Führungsschiene 16b bzw. dem Überhang 28 der sekundären Verriegelungsmittel bewegt werden.

In Fig. 7 ist auf der Seite 13a des Bodenelements 17 eine Spielausgleichvorrichtung 31 dargestellt. Obwohl nicht dargestellt, ist auf der Seite 13b ebenfalls eine Spielausgleichvorrichtung 31 vorhanden, die in gleicher Weise wie die dargestellte ausgebildet ist. Die Spielausgleichvorrichtung 31 umfasst einen zylindrischen Körper 32, welcher an einem Endbereich mit Ankerelementen 33a und 33b versehen ist. Das Ankerelement 33a wirkt mit dem Überhang 28 und das Ankerelement 33b wirkt mit einem Überhang 34 der zweiten Führungsmittel zusammen, wodurch ein Spielausgleich in Z-Richtung erfolgt.

An einem oberen Bereich ist der Körper 32 um eine Schwenkachse a6 an dem Bodenelement 17 gehalten. Nicht dargestellte Federn belasten die Ankerelemente 33a und 33b in Richtung z1 gegen die Überhänge 28 und 34 und verhindern dabei ein Spiel in z-Richtung. Die Ankerelemente 33a und 33b können in Abhängigkeit der Stellung der Steuerelemente 30a und 30b in Eingriff oder außer Eingriff mit den Überhängen 28 und 34 bewegt werden.

In den Fig. 1 und 8 ist ein als zweiarmiger Hebel ausgebildeter Riegel 35 der X-Verriegelung 21 zu erkennen. Der Riegel 35 weist einen Hebelarm 36 auf, dessen Endbereich 37 derart ausgebildet ist, dass er mit wenigstens einem Schlitz 38 von einer Vielzahl von in die Führungsschiene 16a eingebrachten Schlitzen 38, die quer zu der Erstreckungsrichtung x1, x2 der Führungsschiene 16a verlaufen, in Eingriff bringbar ist. Auf diese Weise kann mit dem Riegel 35 eine Bewegung des Ausstattungsteils 11 in die Richtungen x1 und x2 verhindert werden. Gemäß Fig. 8 steht der Endbereich 37 des Riegels 35 in Eingriff mit zwei Schlitzen 38.

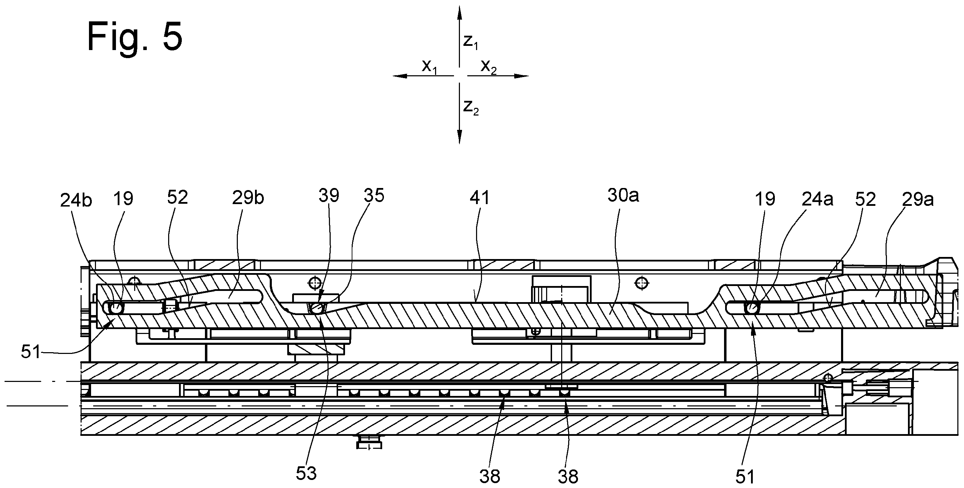

Ein Endbereich 39 eines Hebelarms 40 des Riegels 35 steht mit einer Steuerfläche 41 des Steuerelements 30a in Eingriff (die Steuerfläche 41 ist in Fig. 8 nicht erkennbar - siehe z.B. Fig. 5). Der Riegel 35 ist derart federbelastet, dass er sich automatisch in die Riegelposition bewegt.

Gemäß Fig. 5 befinden sich Endbereiche 19 der beiden Riegel 24a und 24b in einem Bereich 51 einer von der jeweiligen Kulisse 29a und 29b gebildeten Steuerfläche 52. Der Endbereich 39 des Riegels 35 ist in einem Bereich 53 der Steuerfläche 41 angeordnet. In dieser Position des Steuerelements 30a ist der Riegel 35 in die Riegelposition gemäß der Fig. 5 und 8 bewegt. Die Riegel 24a und 24b sind in Eingriff mit dem Überhang 28. Die Ankerelemente 33a und 33b der Spielausgleichvorrichtung 31 untergreifen die Überhänge 28 und 34 (siehe Fig. 7).

Die Verriegelungsvorrichtung 20a weist gemäß Fig. 1 eine Betätigungsvorrichtung 42 auf, mittels welcher die X-Verriegelung 21 separat oder gemeinsam mit der Z-Verriegelung 22 aus einer Riegelposition in eine Löseposition verstellbar ist. Die Betätigungsvorrichtung 42 umfasst eine Handhabe 43, welche um eine Achse a4 schwenkbar an dem Bodenelement 17 gehalten ist sowie eine Handhabe 44, die um eine Achse a5 ebenfalls schwenkbar an dem Bodenelement 17 gehalten ist.

Mittels einer Übertragungsvorrichtung 45, welche einen um eine Achse a3 schwenkbaren Hebel 46 sowie eine Betätigungsstange 47 umfasst, können bei Betätigung der Handhabe 43 die Steuerelemente 30a und 30b um einen definierten Weg L in Richtung x1 verlagert werden.

Die Handhabe 44 steht mit einer Übertragungsvorrichtung 48 in Verbindung, so dass bei Betätigung der Handhabe 44 die Steuerelemente 30a und 30b um einen definierten Betrag L in Richtung x1 bewegt werden. Die Übertragungsvorrichtung 48 umfasst Lenker 49 sowie eine Betätigungsstange 50, welche mit den Steuerelementen 30a und 30b zusammenwirkt.

Wird nun gemäß Fig. 1 die Handhabe 43 betätigt, schwenkt der Hebel 46 um die Schwenkachse a3 und verlagert die Betätigungsstange 47 um die Länge L in Richtung x1. Die Betätigungsstange 47 ist derart mit beiden Steuerelementen 30a und 30b verbunden, dass diese ebenfalls um eine Länge L in Richtung x1 bewegt werden.

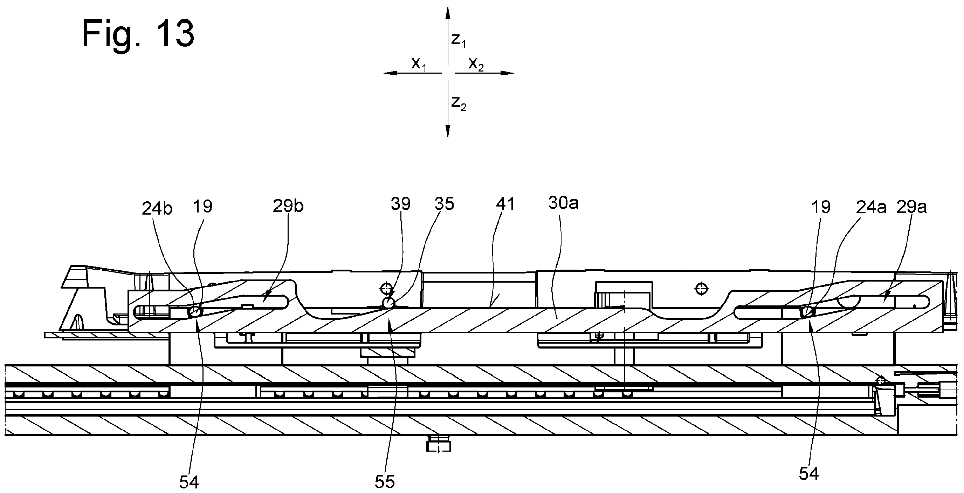

Wird alternativ die Handhabe 44 betätigt, veranlasst diese über die Lenker 49 die Betätigungsstange 50 ebenfalls um eine Länge L in Richtung x1 zu verlagern. Dabei werden auch die Steuerelemente 30a und 30b um den Betrag L in Richtung x1 verlagert (siehe Fig. 13).

Aufgrund der Verlagerung der Steuerelemente 30a und 30b um den Betrag L in Richtung x1 werden die Endbereiche 19 der Riegel 24a und 24b relativ zu den Kulissen 29a und 29b in den Bereich 54 verlagert. Die Z-Position der Steuerfläche 52 hat sich aber dabei nicht geändert, so dass die Riegel 24a und 24b nicht verschwenkt werden, d.h. sie bleiben in Eingriff mit dem Überhang 28.

Der Endbereich 39 des Riegels 35 hingegen wird relativ zu dem Steuerelement 30a bzw. 30b auf einen Bereich 55 des jeweiligen Steuerelements 30a bzw. 30b bewegt (siehe Fig. 13), in welchem die Steuerfläche 41 in Bezug auf den Bereich 53 um einen Betrag Delta Z in Richtung z1 erhöht ist. Der Endbereich 39 des Riegels 35 ist daher ebenfalls um den Betrag Delta z in Richtung z1 verlagert wobei sich der Riegel 35 außer Eingriff mit den zweiten Verriegelungsmitteln, in diesem Fall dem Schlitz 38, in die Löseposition bewegt hat.

Wird erst eine der beiden Handhaben 43 oder 44 und dann die andere Handhabe betätigt, so werden die Steuerelemente 30a und 30b um den Weg 2L verlagert. Die Endbereiche 19 werden bei dieser Bewegung in Kontakt mit einem Bereich 56 der Steuerfläche 52 bewegt, in welchem die Steuerfläche 52 in Bezug auf den Bereich 51 um Delta z in Richtung z2 erhöht ist. Dabei werden die Riegel 24a und 24b außer Eingriff mit dem Überhang 28 bewegt. Der Endbereich 39 wird auf der Steuerfläche 41 in den Bereich 57 verlagert. Seine Z-Position verändert sich bei dieser Bewegung der Steuerelemente 30a und 30b nicht, d.h. der Riegel 35 bleibt außer Eingriff mit den Schlitzen 38. Das Ausstattungsteil 11 kann dann aus den zweiten Führungsmitteln entnommen werden.

Bei dieser Bewegung der Riegel 24a und 24b in die Löseposition werden Tastelemente 58 der Verriegelungsvorrichtungen 20a und 20b aus Aussparungen 59 des Bodenelements 17 herausbewegt. Wird das Ausstattungsteil 11 wieder in die zweiten Führungsmittel 12 eingesetzt, so geraten die Tastelemente 58 in Kontakt mit den zweiten Führungsmitteln 12 und bewegen dabei über die Steuerelemente 30a und 30b die Riegel 24a und 24b in die Position gemäß Fig. 13 in welcher die Riegel 24a und 24b wieder in Eingriff mit dem Überhang 28 stehen.

Werden die Handhaben 43 und 44 wieder in die Ruhestellung bewegt, folgt eine Verlagerung der Steuerelemente 30a und 30b in die Position gemäß Fig. 5, in welcher auch der Riegel 35 wieder in Eingriff mit der Führungsschiene 16a bzw. 16b bewegt ist.

## Patentansprüche

1. Führungsvorrichtung eines Fahrzeugs mit ersten Führungsmitteln (14), die einem Ausstattungsteil (11) zugeordnet sind und mit zweiten Führungsmitteln (12), die einer Struktur (18) des Fahrzeugs zugeordnet sind und die eine Führungsbahn bilden entlang der das Ausstattungsteil (11) in entgegengesetzte Bahnrichtungen (x1, x2) bewegbar geführt ist, mit einer Verriegelungsvorrichtung (20) mit dem Ausstattungsteil (11) zugeordneten ersten Verriegelungsmitteln und mit der Struktur (18) zugeordneten zweiten Verriegelungsmitteln einer X-Verriegelung (21), mittels welcher eine Bewegung entlang der Bahnrichtungen (x1 , x2) lösbar verriegelbar ist und mit dem Ausstattungsteil (11) zugeordneten primären Verriegelungsmitteln und mit der Struktur zugeordneten sekundären Verriegelungsmitteln einer Z-Verriegelung (22) mittels welcher eine Bewegung in eine dritte Richtung (z1) zur Entnahme aus den zweiten Führungsmitteln (12) lösbar verriegelbar ist, wobei die Verriegelungsvorrichtung (20) wenigstens erste Betätigungsmittel (43) und zweite Betätigungsmittel (44) aufweist, mit welchen die X-Verriegelung (21) und / oder die Z-Verriegelung (22) zwischen einer Riegelposition und einer Löseposition bewegbar sind, wobei aufgrund einer Betätigung der ersten Betätigungsmittel (43) oder der zweiten Betätigungsmittel (44) die X-Verriegelung (21 ) in eine Löseposition bewegbar ist, **dadurch gekennzeichnet, dass** aufgrund der Betätigung der ersten Betätigungsmittel (43) und der zweiten Betätigungsmittel (44) die Z-Verriegelung (22) in eine Löseposition bewegbar ist.

2. Führungsvorrichtung nach Anspruch 1, **dadurch gekennzeichnet, dass** die zweiten Führungsmittel (12) von wenigstens einer Schiene gebildet sind.

3. Führungsvorrichtung nach einem der vorangehenden Ansprüche, **dadurch gekennzeichnet, dass** die ersten Verriegelungsmittel mit wenigstens einer ersten Steuerfläche (41) in Eingriff stehen und dass die primären Verriegelungsmittel mit einer zweiten Steuerfläche (52) in Eingriff sind, wobei die erste Steuerfläche (41) und die zweite Steuerfläche (52) zwischen einer Riegelposition und einer Löseposition bewegbar sind.

4. Führungsvorrichtung nach Anspruch 3, **dadurch gekennzeichnet, dass** die erste Steuerfläche (41) und die zweite Steuerfläche (52) einem Steuerelement (30a, 30b) zugeordnet sind, welches zwischen einer Löseposition, einer ersten Riegelposition und einer zweiten Riegelposition bewegbar ist.

5. Führungsvorrichtung nach einem der Ansprüche 3 und 4, **dadurch gekennzeichnet, dass** die erste Steuerfläche (41) und / oder die zweite Steuerfläche (52) einer Kulisse (29a, 29b) zugeordnet ist.

6. Führungsvorrichtung nach einem der Ansprüche 4 und 5, **dadurch gekennzeichnet, dass** bei Betätigung einer der ersten Betätigungsmittel (43) oder der zweiten Betätigungsmittel (44) das Steuerelement (30a, 30b) um einen bestimmten Betrag (L) ausgelenkt wird und dass bei der anschließenden Betätigung der jeweils anderen Betätigungsmittel das Steuerelement (30a, 30b) um einen bestimmten Betrag (L) zusätzlich ausgelenkt wird.

7. Führungsvorrichtung nach einem der Ansprüche 4 bis 6, **dadurch gekennzeichnet, dass** das Steuerelement (30a, 30b) wenigstens in der Löseposition arretierbar ist.

8. Führungsvorrichtung nach Anspruch 7, **dadurch gekennzeichnet, dass** das Ausstattungsteil (11) ein Stellelement umfasst, bei dessen Betätigung die Arretierung des Steuerelements (30a, 30b) lösbar ist, wobei das Stellelement derart angeordnet ist, dass beim Einsetzen des Ausstattungsteils (11) in die zweiten Führungsmittel (12) das Stellelement betätigt wird.

9. Führungsvorrichtung nach einem der vorangehenden Ansprüche, **dadurch gekennzeichnet, dass** die zweiten Führungsmittel (12) zwei Führungsschienen (16a, 16b) und die ersten Führungsmittel (14) wenigstens ein mit jeder Führungsschiene (16a, 16b) zusammenwirkendes Gleitelement oder Wälzelement umfassen.

10. Führungsvorrichtung nach einem der vorangehenden Ansprüche, **dadurch gekennzeichnet, dass** die ersten Verriegelungsmittel und / oder die primären Verriegelungsmittel von einem schwenkbaren oder einem translatorisch bewegbaren Riegel (24a, 24b) gebildet sind.

## Claims

1. Guide device of a vehicle, having first guide means (14) which are assigned to a fixture (11), and having second guide means (12) which are assigned to a structure (18) of the vehicle and which form a guide track along which the fixture (11) is guided movably in opposite track directions (x1, x2), having a locking device (20) with first locking means assigned to the fixture (11) and second locking means of an X-lock (21), which locking means are assigned to the structure (18), the X-lock being able to be used to releasably lock a movement along the track directions (x1, x2), and having primary locking means assigned to the fixture (11) and having secondary locking means of a Z-lock (22), which locking means are assigned to the structure, the Z-lock being able to be used to releasably lock a movement in a third direction (z1) for removal from the second guide means (12), wherein the locking device (20) has at least first actuating means (43) and second actuating means (44) with which the X-lock (21) and/or the Z-lock (22) are movable between a latching position and a release position, wherein, owing to an actuation of the first actuating means (43) or the second actuating means (44), the X-lock (21) is movable into a release position, **characterized in that**, owing to the actuation of the first actuating means (43) and the second actuating means (44), the Z-lock (22) is movable into a release position.

2. Guide device according to Claim 1, **characterized in that** the second guide means (12) are formed by at least one rail.

3. Guide device according to either of the preceding claims, **characterized in that** the first locking means are in engagement with at least one first control surface (41), and **in that** the primary locking means are in engagement with a second control surface (52), wherein the first control surface (41) and the second control surface (52) are movable between a latching position and a release position.

4. Guide device according to Claim 3, **characterized in that** the first control surface (41) and the second control surface (52) are assigned to a control element (30a, 30b) which is movable between a release position, a first latching position and a second latching position.

5. Guide device according to either of Claims 3 and 4, **characterized in that** the first control surface (41) and/or the second control surface (52) are/is assigned to a slotted guide mechanism (29a, 29b).

6. Guide device according to either of Claims 4 and 5, **characterized in that**, when one of the first actuating means (43) or the second actuating means (44) is actuated, the control element (30a, 30b) is deflected by a certain amount (L), and **in that**, when the respective other actuating means is subsequently actuated, the control element (30a, 30b) is additionally deflected by a certain amount (L).

7. Guide device according to one of Claims 4 to 6, **characterized in that** the control element (30a, 30b) can be arrested at least in the release position.

8. Guide device according to Claim 7, **characterized in that** the fixture (11) comprises an actuator element, upon the actuation of which the arresting of the control element (30a, 30b) can be released, wherein the actuator element is arranged in such a manner that the actuator element is actuated when the fixture (11) is inserted into the second guide means (12) .

9. Guide device according to one of the preceding claims, **characterized in that** the second guide means (12) comprise two guide rails (16a, 16b) and the first guide means (14) comprise at least one sliding element or rolling element interacting with each guide rail (16a, 16b).

10. Guide device according to one of the preceding claims, **characterized in that** the first locking means and/or the primary locking means are/is formed by a pivotable or a translationally movable latch (24a, 24b).

## Revendications

1. Dispositif de guidage d'un véhicule comprenant des premiers moyens de guidage (14), qui sont associés à une partie d'équipement (11), et comprenant des deuxièmes moyens de guidage (12), qui sont associés à une structure (18) du véhicule et qui forment une voie de guidage le long de laquelle la partie d'équipement (11) est guidée de manière à pouvoir se déplacer dans des directions de voie opposées (x1, x2), comprenant un dispositif de verrouillage (20) comprenant des premiers moyens de verrouillage associés à la partie d'équipement (11) et comprenant des deuxièmes moyens de verrouillage associés à la structure (18) d'un système de verrouillage en X (21), au moyen duquel un déplacement le long des directions de voie (x1, x2) peut être verrouillé de manière libérable, et comprenant des moyens de verrouillage primaires associés à la partie d'équipement (11) et comprenant des moyens de verrouillage secondaires associés à la structure d'un système de verrouillage en Z (22) au moyen duquel un déplacement dans une troisième direction (z1) pour l'extraction hors des deuxièmes moyens de guidage (12) peut être verrouillé de manière libérable, le dispositif de verrouillage (20) présentant au moins des premiers moyens d'actionnement (43) et des deuxièmes moyens d'actionnement (44), avec lesquels le système de verrouillage en X (21) et/ou le système de verrouillage en Z (22) peuvent être déplacés entre une position de verrouillage et une position de libération, le système de verrouillage en X (21) pouvant être déplacé dans une position de libération en raison d'un actionnement des premiers moyens d'actionnement (43) ou des deuxièmes moyens d'actionnement (44), **caractérisé en ce que** le système de verrouillage en Z (22) peut être déplacé dans une position de libération en raison de l'actionnement des premiers moyens d'actionnement (43) et des deuxièmes moyens d'actionnement (44).

2. Dispositif de guidage selon la revendication 1, **caractérisé en ce que** les deuxièmes moyens de guidage (12) sont formés par au moins un rail.

3. Dispositif de guidage selon l'une quelconque des revendications précédentes, **caractérisé en ce que** les premiers moyens de verrouillage sont en prise avec au moins une première surface de commande (41) et **en ce que** les moyens de verrouillage primaires sont en prise avec une deuxième surface de commande (52), la première surface de commande (41) et la deuxième surface de commande (52) pouvant être déplacées entre une position de verrouillage et une position de libération.

4. Dispositif de guidage selon la revendication 3, **caractérisé en ce que** la première surface de commande (41) et la deuxième surface de commande (52) sont associées à un élément de commande (30a, 30b), qui peut être déplacé entre une position de libération, une première position de verrouillage et une deuxième position de verrouillage.

5. Dispositif de guidage selon l'une quelconque des revendications 3 et 4, **caractérisé en ce que** la première surface de commande (41) et/ou la deuxième surface de commande (52) est associée à une coulisse (29a, 29b).

6. Dispositif de guidage selon l'une quelconque des revendications 4 et 5, **caractérisé en ce que**, lors de l'actionnement de l'un des premiers moyens d'actionnement (43) ou des deuxièmes moyens d'actionnement (44), l'élément de commande (30a, 30b) est dévié d'un certain montant (L) et **en ce que**, lors de l'actionnement ultérieur des autres moyens d'actionnement respectifs, l'élément de commande (30a, 30b) est dévié en plus d'un certain montant (L).

7. Dispositif de guidage selon l'une quelconque des revendications 4 à 6, **caractérisé en ce que** l'élément de commande (30a, 30b) peut être bloqué au moins dans la position de libération.

8. Dispositif de guidage selon la revendication 7, **caractérisé en ce que** la partie d'équipement (11) comprend un élément de réglage, lors de l'actionnement duquel le blocage de l'élément de commande (30a, 30b) peut être libéré, l'élément de réglage étant agencé de telle sorte que lors de l'insertion de la partie d'équipement (11) dans les deuxièmes moyens de guidage (12), l'élément de réglage est actionné.

9. Dispositif de guidage selon l'une quelconque des revendications précédentes, **caractérisé en ce que** les deuxièmes moyens de guidage (12) comprennent deux rails de guidage (16a, 16b) et les premiers moyens de guidage (14) comprennent au moins un élément de glissement ou un élément de roulement coopérant avec chaque rail de guidage (16a, 16b).

10. Dispositif de guidage selon l'une quelconque des revendications précédentes, **caractérisé en ce que** les premiers moyens de verrouillage et/ou les moyens de verrouillage primaires sont formés par un verrou pouvant pivoter ou pouvant se déplacer en translation (24a, 24b).
